# EUROPEAN PATENT SPECIFICATION

(11) **EP 0 530 262 B1**
(45) Date of publication and mention of the grant of the patent: **16.08.1995**
(21) Application number: 91909821.0
(22) Date of filing: 22.05.1991
(51) Int. Cl.: G02B 6/04, G01N 21/77, A61B 5/00

(54) **OPTICAL PROBE**
OPTISCHE SONDE
SONDE OPTIQUE

(30) Priority: 22.05.1990 US 526822
(43) Date of publication of application: 10.03.1993
(73) Proprietor: OPTEX BIOMEDICAL, INC., The Woodlands, Texas 77380 (US)
(72) Inventor: COSTELLO, David, J., Spring, TX 77389 (US); SALTER, James, R., The Woodlands, TX 77380 (US); SCHLAIN, Leslie, A., The Woodlands, TX 77380 (US); KOSA, Nadhir, B., The Woodlands, TX 77380 (US); SINGH, Raghuvir, The Woodlands, TX 77381 (US)
(74) Representative: Lucas, Brian Ronald
(86) International application number: PCT/EP91/00934
(87) International publication number: WO 91/18306

(56) References cited:
- EP-A- 0 108 527
- EP-A- 0 276 977
- WO-A-87/00920
- WO-A-90/08306
- US-A- 4 430 566
- US-A- 4 706 677
- US-A- 4 797 549
- PATENT ABSTRACTS OF JAPAN, vol. 14, no. 554 (P-1140), 10 December 1990 ; & JP-A-02236144
- PATENT ABSTRACTS OF JAPAN, vol. 14, no. 116 (P-1016), 5 March 1990 ; & JP-A-1314908
- PATENT ABSTRACTS OF JAPAN, vol. 5, no. 13 (P-046), 27 January 1981 ; & JP-A-55142215

## Description

This invention relates to a method and apparatus for making an optical fibre bundle and, more particularly, but not exclusively, to a method and apparatus for making an optical probe.

In 1985, David Costello, one of the co-inventors named in this application, filed his application entitled "Fibre Optic Probe For Quantification of Colorimetric Reactions" which resulted in the issuance of US Patent 4 682 895. This patent describes an optical probe which can be inserted into an artery to monitor the concentration of certain dissolved gases in the blood. Previously, the concentration of such gases was measured in a laboratory in blood samples taken from the patient.

With the new optical probe, real-time determination of a biochemical parameters became possible, providing up-to-the-minute information to the physician. This can be of critical importance with an unstable patient whose biochemical parameters and blood gases may change dramatically over a short period of time. Real-time current and trend information is much more valuable to a physician than the previously-available discrete historical data.

Whilst the applicants optical probe is eminently suitable for its original purpose the inventors felt that it would be desirable to be able to simultaneously monitor more than one function, for example the concentration of oxygen and carbon dioxide in the patient's bloodstream and the pH of the blood. Because of the physical properties of the optical fibres and the very small dimensions involved, many manufacturing methods were conceived but found unsuitable for one or other reason. A particular problem with many methods was that they were totally unsuitable for even modest production runs resulting in a prohibitatively expensive product bearing in mind the highly skilled labour involved.

US-A-4 797 549 discloses a method of making an optical sensor in which a fibre optic is formed into a gentle U-shape and supported in a horizontal plane by five supports which extend upwardly from the floor of a rectangular mould. During fabrication a thermosetting plastics material is poured into the mould and allowed to set. The set mass is then removed from the mould and a slit cut through the fibre optic to form a gap. Such a method of production would be totally impractical for the construction of optical probes in accordance with the invention.

US-A-4 706 677 discloses an optical sensor containing three fibres which are laid side by side. Each optical fibre is provided with a chamber the upstream end of which communicates with a base unit and the downstream end of which is provided with a mirror for reflecting light transmitted down the fibre optic. The lengths of the fibre downstream of the mirrors are bonded together to form a strong structure.

According to one aspect of the present invention there is provided a method of making an optical fibre bundle, characterized in that it comprises the steps of:-
a) bending a plurality of optical fibres to form a fibre bend in each;
b) suspending the plurality of optical fibres at the fibre bends over at least one suspension member;
c) holding the fibres taut to maintain the fibres bent;
d) applying potting material to the plurality of optical fibres;
e) curing the potting material; and
f) removing the plurality of fibres from the suspension member.

According to another aspect of the present invention there is provided an apparatus for making an optical fibre bundle in accordance with the present invention, the apparatus comprising;
an upwardly extending member;
suspension means secured to the upwardly extending member for disposing thereover a plurality of optical fibres, the fibres thus disposed each having a fibre bend extending over the suspension means; and
holding means secured to the upwardly extending member for holding at least one end of an optical fibre distant from its fibre bend.

According to a further aspect of the present invention there is provided an optical probe made by a method in accorance with the present invention, said optical probe comprising a plurality of optical fibres, each having a bend therein, the fibre bends disposed near a tip of the probe;
the fibre bends and a portion of the fibres adjacent the fibre bends encapsulated in cured potting material;
each fibre having a sample chamber therein containing a chemical indicator which reacts to a particular chemical substance that comes in contact with the chemical indicator.

Preferably, no two fibre bends are in contact with each other and no portions of the fibres adjacent the fibre bends are in contact with each other.

Advantageously, the sample chambers are five-walled openings.

Preferably, the sample chambers are longitudinally spaced apart from each other by at least 665 microns.

Advantageously, there are three sample chambers, one containing a pH indicator, one containing an oxygen indicator, and one containing a carbon dioxide indicator.

Preferably, no sample chamber is closer to an end tip of the probe than 2240 microns.

Advantageously, the probe is between 600 and 730 microns in diameter.

Preferably, the probe includes a thermocouple with a metal bead in the end of the probe and two metal leads extending from the end of the probe with the fibre ends.

There is also provided, in combination, an optical probe in accordance with the invention, and a plastic connector secured thereto, part of the connector being removable, the connector for facilitating introduction of the probe into an intra-arterial cannula, the connector having a separate channel that permits fluids to be taken from or introduced into the cannula while the probe is in place within the cannula;
a tubing harness connected to the connector for protecting and containing a portion of the optical fibres of the probe;
the tubing harness extending from the connector to a junction box
a sensor interface unit which communicates with the junction box and which transmits light input from a base unit to the probe and which transmits light coming out of the probe to the base unit, and wherein said base unit includes a source of light and means for processing light returning from said probe.

In a preferred embodiment of apparatus in accordance with the invention, the mandrel has a diameter equal to that of a fibre. The resulting bend thus has a radius approximately equal to the diameter of the optic fibre.

An apparatus for making optical probes according to the present invention, in one embodiment has a holding jig or spider with an open centre and holes spaced around the centre. Mandrels or spokes (e.g., of wire, thread, suture, or of fibre optic material) are threaded through pairs of holes to intersect at an open centre area and divide the open centre area into wedges. The ends of the optic fibres are inserted into the wedges, preferably one per wedge. The fibre ends are clamped to a fabrication stand which is flexible so that, by bending the stand and readjusting the clamp, varying degrees of tension are applied along the optic fibres. A tip support coating, e.g., epoxy cement or other potting material, is applied to the tip of the fibre bundle in the area of the mandrels and extending down the fibre bundle. This insures that the fibre geometry and disposition will be maintained. After the epoxy has cured the mandrels are removed by cutting them off close to the intersecting point. In another embodiment the mandrels are lubricated so they will slide away from the fibres.

Under microscopic examination it has been observed that in one embodiment one half of each fibre can be made to tend toward the outside edge of the completed probe by proper placement of the fibres. This gives the probe in this embodiment a rounded triangular cross-section and facilitates removing a slice from each fibre, e.g., with a diamond edged wafering saw. In another embodiment the use of cantilevered micro hooks for fibre suspension permits a more rounded probe shape.

Tension may be applied to the fibres in a variety of ways, including but not limited to: stretching the fibres and clamping them in place; fixing the mandrels in place on a frame and weighting the fibre ends; or applying magnetic force to ferromagnetic elements applied to fibre tips or mandrels. Tension can also be applied to having a vacuum chuck receive and hold the fibre ends distal from the fibre bend.

Turning now to the sample chambers, indicators may be immobilized by chemically binding them to the surface of solid particles, e.g., porous glass particles, latex microspheres, or adsorbent polymers such as styrene or polydivinyl benzene. These solid particles may be held in place within the sample chamber by a gel, e.g. a solution of hydroxy propyl-cellulose. A selectively permeable membrane is applied over the indicator containing sample chambers to prevent loss of the indicator compound or contamination by undesired chemical species in the environment.

In another embodiment of a process according to the present invention, fibres are emplaced over cantilevered micro hooks disposed above magnetic positioning clamps secured to weights which provide tension to hold the fibre bends in place on the cantilevered micro hooks. To facilitate and simplify the process, the free fibre ends are received in and held in small diameter tubes to which a vacuum has been applied. The cantilevered micro hooks are disposed on pivotable arms for ease of disposition. After one or more fibres have been positioned on the arms, the arms are moved together so that the fibres, and particularly the fibre bends are disposed with respect to each other as they will be in the finished probe. Thus, a more rounded configuration of multiple fibres can be achieved, rather than triangular, which occupies less total space. In this embodiment during the fabrication process the fibres hang independently of each other and each fibre has its own applied weight for tension and its own set of vacuum tubes. Thus the fibres do not compete for disposition on a mandrel or push against or down on each other. After the fibres are removed from the cantilevered hooks and vacuum tubes, the bends are also potted (in addition to several inches of the fibres that are potted prior to removal from the hooks). The potted tip is then subjected to the ultraviolet lamp beam for curing.

For a better understanding of the present invention reference will now be made, by way of example, to the accompanying drawings, in which:-
Fig. 1 is a cross-sectional view of an optical fibre in tension around a mandrel;
Fig. 2 is a top plan view of Fig. 1;
Fig. 3a is a side view of one arrangement of three optical fibres on mandrels;
Fig. 3b is a top plan view of Fig. 3a;
Fig. 4a is a side view of a second arrangement of three optical fibres on mandrels;
Fig. 4b is a top plan view of Fig. 4a;
Fig. 5a is a side view of a third arrangement of three optical fibres on mandrels;
Fig. 5b is a top plan view of Fig. 5a;
Fig. 6 is a side view of an apparatus used in fabricating an optical probe according to the present invention;
Fig. 7 is a cross-sectional view of a vacuum chuck similar to the vacuum chuck used in the apparatus of Fig. 6a;
Fig. 8a is a top plan view of a "spider";
Fig. 8b is a side view of the "spider" shown in Fig. 8a;
Fig. 9 is a perspective view of part of the tip of one embodiment of an optical probe in accordance with the present invention;
Fig. 10 is a cross-sectional view of a second embodiment of an optical probe in accordance with the present invention;
Fig. 11a is a side view of the optical probe of Fig. 10;
Fig. 11b is a top view of the optical probe of Fig. 10;
Fig. 12 is a cross-sectional view of a sample chamber for measuring pH;
Fig. 13 is a cross-sectional view of a sample chamber for measuring CO₂ levels;
Fig. 14 is a cross-sectional view of a sample chamber for measuring O₂ levels;
Fig. 15 is a side view of an optical probe mounted in an intra-arterial cannula;
Fig. 16 is a schematic view of a sensor unit for use with the optical probe shown in Fig. 10;
Fig. 17 is a side view in cross-section of a protective housing for part of the optical probe;
Fig. 18 is a side view of the optical probe emerging from part of the protective housing shown in Fig. 17;
Fig. 19 is a side view of the tip of the optical probe in Fig. 15 and part of the intra-arterial cannula of Fig. 15;
Fig. 20a is a side view of an apparatus for producing optical probes according to the present invention;
Fig. 20b is a front view of the apparatus of Fig. 20a;
Fig. 20c is a view along line A-A of the apparatus of Fig. 20a ;
Fig. 20d is a top view of the apparatus of Fig. 20a;
Fig. 21 is a detailed side view of fibre holders of the apparatus of Fig. 20a;
Fig. 22 is a cross-sectional view of an optical probe made as shown in Figs. 21 and 20a;
Fig. 23 is a face view of the optical probe of Fig. 22;
Fig. 24 is a side view of the optical probe of Fig. 22;
Fig. 25 is a cross-sectional view of a third embodiment of an optical probe according to the present invention;
Fig. 26 is a cross-sectional view of a fourth embodiment of an optical probe according to the present invention;
Fig. 27 is a partial top view of a fibre guide of the apparatus of Fig. 20a;
Fig. 28 is a partial top view of another fibre guide of the apparatus of Fig. 20a.

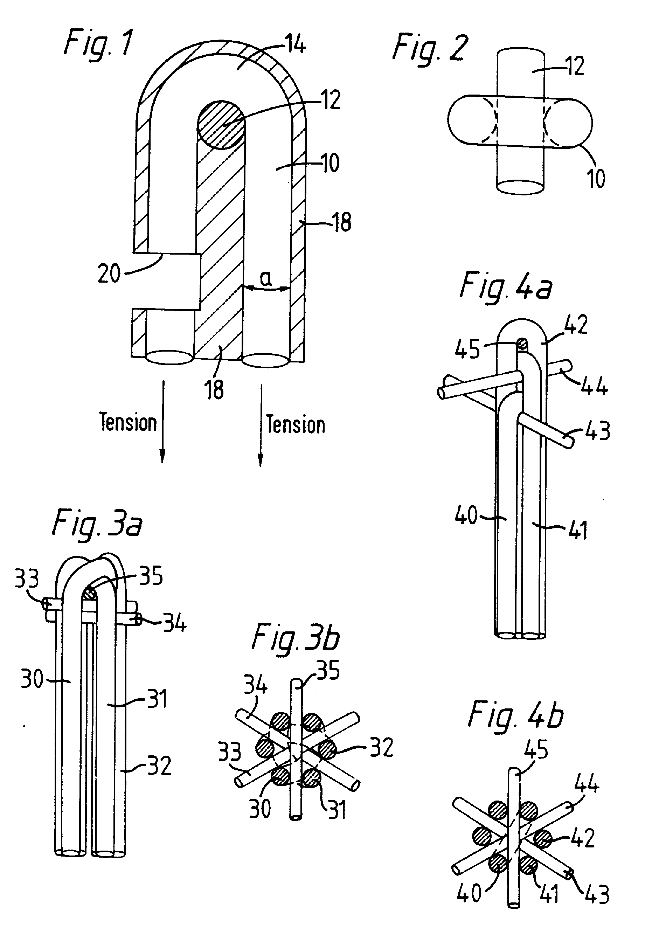

Referring now to Figs. 1 and 2, an optical fibre 10 of diameter "a" is shown in tension around a mandrel 12, producing a bend 14 in the fibre. The mean radius of the bend 14 is approximately equal to the diameter "a" of the optical fibre 10. The partial geometry and configuration of the optical fibre 10 is maintained by applying a potting material 18 around the optical fibre 10. After the potting material 18 has been applied and cured, the mandrel 12 may be removed by cutting it close to the fibre optic bundle and carefully withdrawing it. Another layer of coating can be applied to the fibre by dipping or spraying on the appropriate potting material to seal the hole left by the mandrel.

A sample chamber 20 is provided in the optical fibre 10 for containing and holding a chemical-indicating colorimetric material.

As shown in Figs. 3a and 3b, a common radial configuration of mandrels may be employed for different arrangements of multiple optical fibres.

In Fig. 3a and 3b three optical fibres 30, 31, 32 are stacked on top of a three-mandrel stack of mandrels 33, 34 and 35. In this configuration the optical fibres contact each other and compete for position on the mandrels. Half of each optical fibre resides slightly recessed within the total cross-section of multi-fibre arrangement. Each fibre is thus disposed so that it is presented for convenient and effective formation of a sample chamber therein.

As shown in Figs. 4a and 4b, mandrels 43, 44 and 45 are stacked with a common radial pattern as viewed from above (Fig. 4b) but the mandrels are spaced apart by optical fibres 40, 41 and 42 disposed on the mandrels. In this configuration the optical fibres do not bear down directly on each other, particularly when tension is applied.

A three channel probe was made of the configuration of Fig. 3a using plastic fibre and wire mandrels of 250 micron diameters. The resulting probe had a maximum diameter of 1.56mm.

Three probes were made with optical fibre mandrels and optical fibres with 125 micron diameters. These probes had maximum diameters of 630 microns, 800 microns, and 584 microns according to the tension applied to the optical fibres. The maximum diameter of the finished probe is inversely related to the tension applied to the fibre bundle during fabrication.

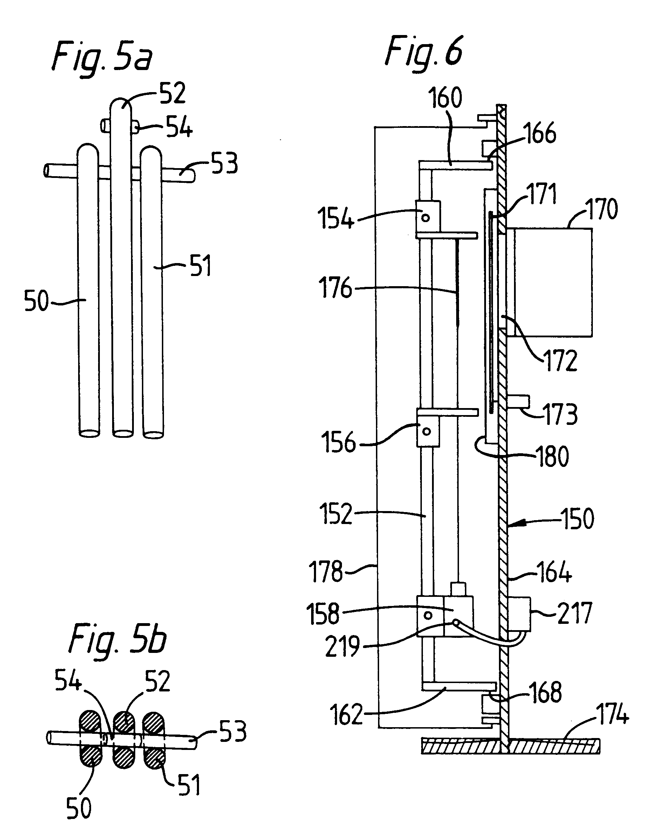

Referring now to Figs. 5a and 5b, optical fibres 50 and 51 are supported by a mandrel 53 and a mandrel 54 supports an optical fibre 52 spaced apart from the optical fibres 50, 51 and the mandrel 53. The mandrels 53 and 54 may be spaced apart any desired and workable distance. The optical fibres 50, 51 and 52 may have different bend radiuses. These radiuses may be varied to produce an arrangement that is of a desired overall shape, e.g., circular or rectangular. These different shapes of the fibre bundle may facilitate cutting of the sample chamber or may enhance the flow profile of fluids flowing past the optical probe in use.

As shown in Figs. 5a and 5b, the optical fibres may be positioned so that they are not in contact with each other. This provides complete separation of sensor channels and facilitates positioning and removal of mandrels. It is, however, within the scope of this invention to provide such an arrangement in which an optical fibre does contact an adjacent optical fibre.

With respect to the arrangement shown in Figs. 3a, 4a and 5a, three fibres are shown. It is within the scope of this invention to employ two or more fibres in such arrangements. Of course using a greater number of fibres will increase the overall size of the resulting optical probe.

Referring now to Fig. 6 there is shown an apparatus 150 for manufacturing optical probes. The apparatus 150 comprises an upright member 152 to which are secured a top spider 154, a mid-position spider 156 and a vacuum chuck 158. These items may be semi-permanently secured to the upright member 152 so that they can be moved and positioned as desired.

The upright member 152 is secured to a top arm 160 and a bottom arm 162 which in turn are pivotally connected to a wall 164 by pivots 166 and 168 respectively. The wall 164 is mounted on a base 174. Radiation from an ultraviolet lamp 170 passes through a quartz window 172 in the wall 164 to cure potting material applied to a bundle 176 of one or more optical fibres disposed between the spiders 154, 156 and the vacuum chuck 158. The vacuum chuck is movably disposed on the upright member 152 to facilitate the handling of ends of the optical fibres in the bundle 176 and to provide adjustability of the tension on the optical fibres. A shield 178 movably connected to the wall 164 can be moved into position to shield personnel from radiation emitted by the ultraviolet lamp 170. An electrostatic charge neutralizer 180 secured to the wall 164 eliminates electrostatic charges in the fibres.

Pulsed intermittent application of the radiation from the ultraviolet lamp 170 can be achieved by alternately turning the lamp on and off or by periodically blocking the beam. As shown in Fig. 6, a shutter 171 is disposed so that it may be moved to close off the quartz window 172. The shutter 171 is connected to a motor 173 which operates to move the shutter 171 toward and away from the quarts window to achieve the desired pulsing of radiation for curing the potting material. Pulses of 0.75 seconds duration are preferred for preferred potting materials; pulses of longer duration might cause a damaging temperature rise in the fibres. A heat shield can be placed over the fibre bends on the spider during this curing operation to protect them from heat damage.

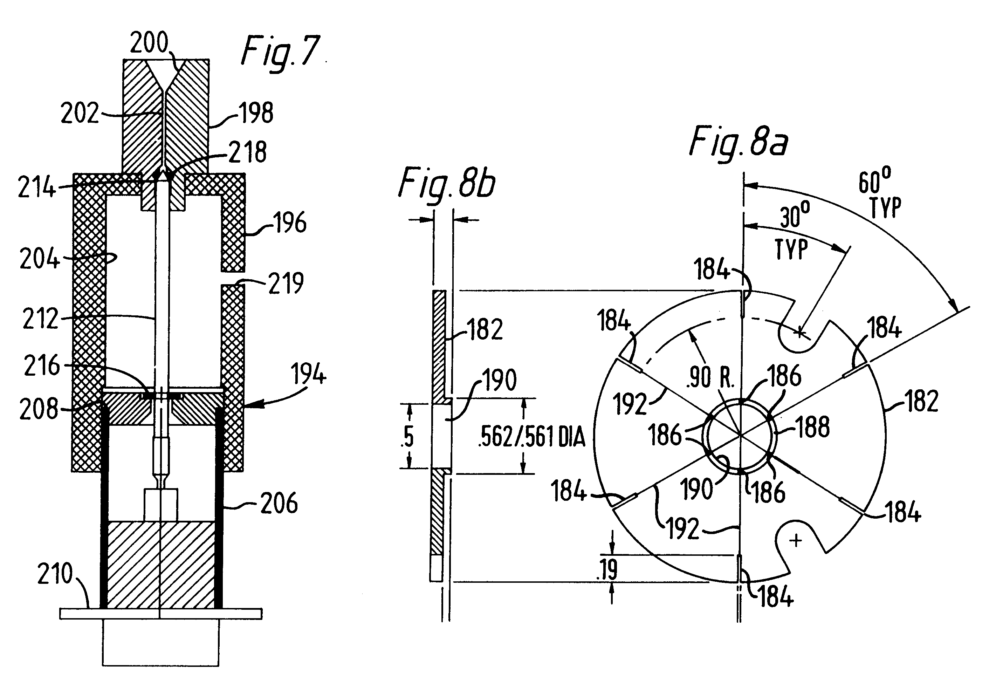

Referring now to Fig. 7, a vacuum chuck 194 (like the vacuum chuck 158 of Fig. 6) has a chuck body 196 with a chuck funnel 198 having a concave funnel opening 200 for receiving the ends of optical fibres and a funnel bore 202 through which the fibre ends pass into a funnel chamber 204. The chuck body 196 is movably mounted above a dash pot 206 which is mounted on a dash pot base 210. When the chuck body 196 moves downwardly, a ram 212 moves into a bottom bore 214 of the funnel bore 202, clamping the ends of optical fibres between the ram and an O-ring 218 in the funnel bore. The rod is sealed by a bottom seal 216. A vacuum is applied to the chuck by a vacuum pump 217 (Fig. 6) through an opening 219. The vacuum chuck applies minimal tension to the fibres.

As shown in Figs. 8a and 8b, a spider disc 182 (used, e.g., with the spiders 154 and 156 of the apparatus 150) has six slots 184 and six notches 186 in the middle ridge 188 surrounding a hole 190. Wires 192 pass through these notches and slots and secured to the disc serve to separate optical fibres held therebetween. Dimensions indicated here are in inches.

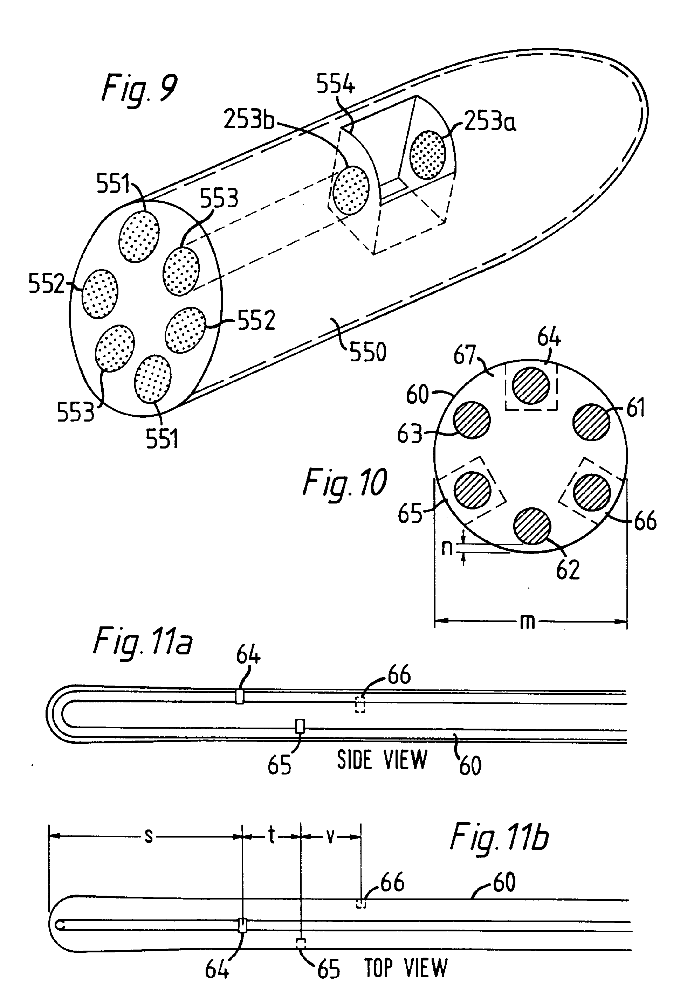

Referring now to Fig. 9, an optical probe 550 according to the present invention with coatings and membranes as previously described (and like the probe 60 described below) is shown containing three optical fibres 551, 552, 553. Sample chamber 554 is shown as a five-walled chamber. The sample chamber 554 is about 100 microns long and can be, preferably, 85 to 115 microns long. The preferred depth ranges between 130 and 160 microns. The optical probe 550 is about 700 microns in diameter. It is preferred that this sample chamber be formed by using an excimer laser because use of such a laser provides precise location, exact dimensions, and an optically clear finish to cut fibre faces 253a and 253b.

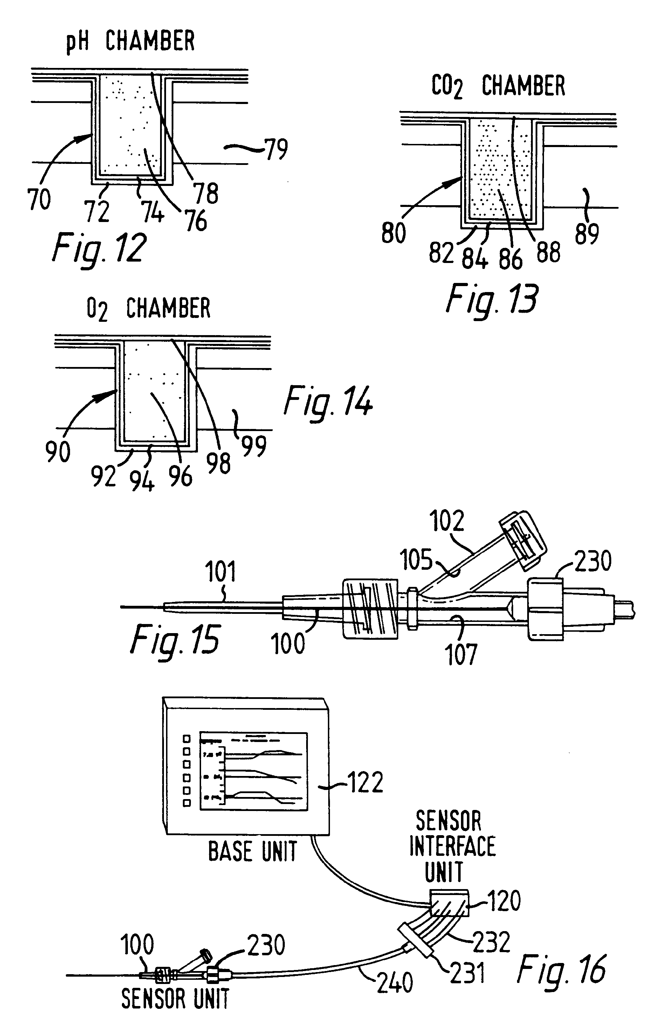

As shown in Figs. 10, 11a and 11b, a second optical probe 60 according to the present invention has three optical fibres 61, 62 and 63 encapsulated in cured potting material 67. Each optical fibre 61, 62 and 63 is associated with a sample chamber 64, 65, 66 respectively. The distance m is the outside diameter of the fibre optic probe 60 and should be controlled as appropriate for the intended use of the probe. As an example, if the intended use is for insertion through an arterial cannula the outside diameter should be small enough to fit easily through the cannula. The distance n is the thickness of encapsulant material lying over a particular fibre, i.e., the cover. This distance affects the volume of the sample chamber, the separation of the light path from the outside environment, and the outside diameter of the optical probe. The optical probe 60 has been coated (undercoating, overcoating, e.g., as in Fig. 12) and the sample chambers 64, 65, 66 are like the chambers 70, 80, 90, respectively (Figs. 12, 13, 14). Membranes have been applied over the sample chambers 64, 65, 66 as for the chambers 70, 80, 90.

In the embodiment of Figs. 10, 11a and 11b, the longitudinal distances from sample chamber 64 to the tip end of the optical probe is about 2540 microns and preferably is in the range of 2240 to 2840 microns. The longitudinal distance t between chambers 64 and 65 is 790 microns and is preferably in the range of 915 to 665 microns as is the distance v between the chambers 65 and 66. This preferred longitudinal spacing minimizes the depth of intrusion into, i.e., a human blood vessel, yet reduces structural weakness which might be caused by chambers spaced closely together. This spacing also facilitates loading of chemical indicators into sample chambers as well as the application of membrane material over sample chambers.

A pH sample chamber 70 through an optical fibre 79 is shown in Fig. 12. The chamber 70 has an undercoating 72 (preferably of a water impermeable polymer such as commercially available under the Trade Marks Petrach SE, Teflon, or Perylene), to protect the sample chamber from changes in chemical concentration due to the diffusion of water and an overcoating 74 of the sample material. The undercoating 72 may be of multiple layers to increase resistance to water transport.

A pH indicating material 76 (e.g., phenyl red, phenolphthalein, buomocresol green, or other subtalein indicators that react, e.g., change colour or fluoresce upon a change in pH) is introduced and is covered by a selective membrane 78 (e.g., nitro cellulose or porous hydrophilic polymers). The membrane 78 selectively permits hydronium ions to flow from outside the optical probe 79 into the sample chamber 70. The coatings are applied before sample chambers are formed.

As shown in Fig. 13, a carbon dioxide sample chamber 80 through an optical fibre 89 has an undercoating 82 (like 72); an overcoating 84 (like 74); a CO₂ indicator 86 (e.g., phynol red combined with bicarbonate or other pH indicator); and a selective membrane 88 which selectively permits CO₂ to pass from outside the optical fibre 89 into the sample chamber 80. The CO₂ reacts with water present in the sample chamber 80 to create carbonic acid which in turn reacts to change the colour of the pH indicator present in the chamber. Essentially any pH indicator may be used to indicate CO by combining the indicator with bicarbonate and isolating the reaction from hydronium ions in the environment while permitting access to CO₂.

Referring now to Fig. 14, an oxygen sample chamber 90 through an optical fibre 99 has: an undercoating 92; an overcoating 94; an oxygen-indicating colorimetric substance 96 [e.g., BASF Fluorol Green Gold (perylene dibutyrate)] or other fluorescent chemicals which respond to the presence of oxygen: and an oxygen semi-permeable membrane 98 (e.g., silicone rubber, PTFE, porous polypropylene or porous polycarbonate) which selectively permits oxygen to pass from outside the fibre 99 to the oxygen-indicating substance 96.

With phenol red material immobilized on porous glass, the glass and membrane are supported by a material such as hydroxy propyl cellulose or hydroxy ethyl cellulose (plus bicarbonate for CO₂). An immobilizer is used to inhibit phenyl red (indicator) from migrating out of the sample chamber. The support material can be applied manually by mixing it with porous glass. Cellulose acetate is applied to the entire tip of a sensor to separate the sample chamber from the exterior environment to insure only the desired analyte comes in and to hold the indicator in the sample chamber.

A measurement of CO₂ or oxygen concentration accomplished by the optical probe of Fig. 14 can be expressed as a partial pressure of total gas.

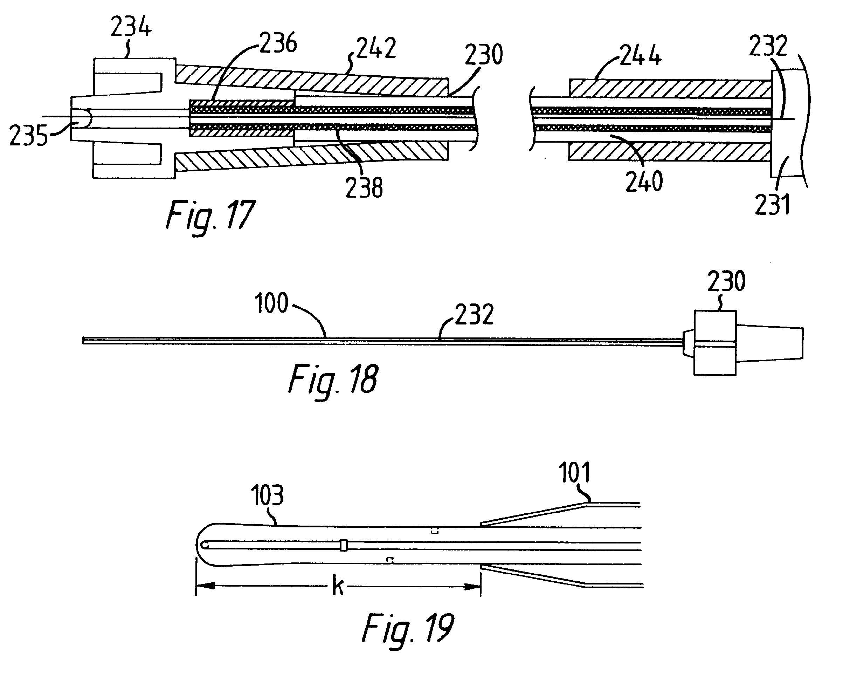

As shown in Fig. 18 an optical probe 100 (like the optical probe 60) has a bundle of optical fibres 232 which extend through a connector 230. As shown in Fig. 17 the bundle of fibres is glued into a male fitting 234 with adhesive 235. (Bundle 232 is like previously described bundle 60.) The connector 230 is made preferably from polycarbonate plastic. A protective tube 242, preferably made from polyvinylchloride tubing is secured around the male fitting 234 and provides strain relief. The bundle 232 is surrounded by a black inner tube 238, preferably made from polyethylene to provide lubricity in the interior of the tubing to facilitate the passing of fibres therethrough. The black colour prevents ambient light from affecting the fibres. A protective tube 240 surrounds the tube 238. The tube 240 is made preferably from polyethylene and extends from the connector 230 to a junction box 231 (Fig. 16). The tube 242 surrounds a portion of the tube 240, as does a tube 244 (like tube 242) adjacent the junction box 231. In one embodiment the distance from the male fitting 234 to the junction box 231 is about 305mm (12 inches).

As shown in Fig. 15 the probe 100 has been disposed in an intra-arterial cannula 101.

As shown in Fig. 16, the optical probe 100 may then be connected to a sensor interface unit 120 (shown as separate from a base unit but which could be incorporated therein) which is connected to a base unit 122. The sensor interface unit 120 provides light input to the probe and detects and measures light coming out of the probe. Signals from the unit 120 are then fed into the base unit where they are processed for display or recordation or both.

As shown in Fig. 19, a tip 103 of the optical probe 100 extends into the intra-arterial cannula 101. The cannula 101 is suitable for introduction into and disposition within a human blood vessel. The tip 103 is disposable in the cannula (e.g., when the cannula is emplaced in an artery) by connecting the connector 102 to the cannula and then inserting the probe 100 into the cannula through one branch 107 of the connector 102. It is preferred that the distance k from the end of the cannula to the tip of the optical probe be such that there is good "washability" or fluid flow over the sample chambers; e.g., in certain preferred embodiments this is about 4910 microns. It is preferred that the distance from the end of the cannula to the first adjacent sample chamber be such that fluid injected through the connector does not diffuse into the blood in the region of the sample chambers producing erroneous readings; e.g., in preferred embodiments this is about 790 microns. Whatever fluid was being introduced into or withdrawn from the cannula may be introduced or withdrawn from a branch 105 of the connector through which the probe 100 does not extend.

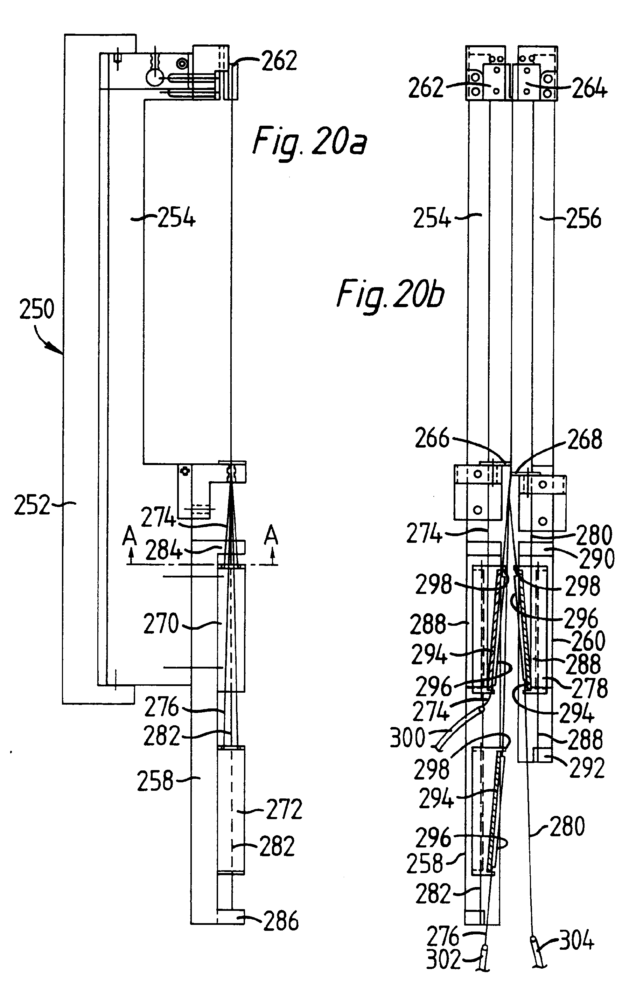

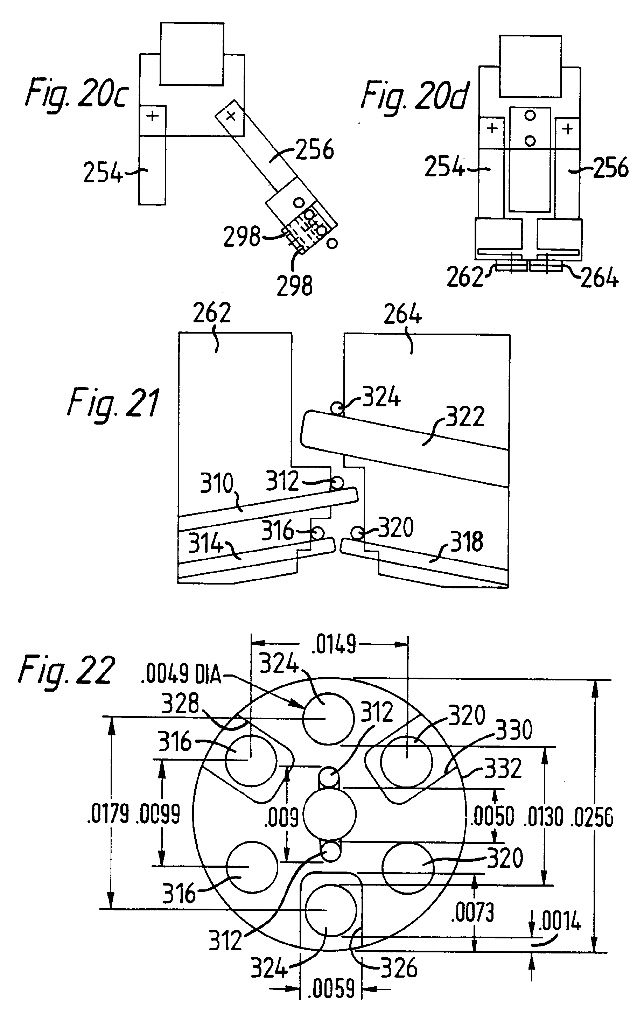

Figs. 20a - 20d illustrate another apparatus 250 for fabricating an optical probe according to the present invention. The apparatus 250 has an upright member 252 to which are pivotably connected two arms 254 and 256. A weight holder 258 is secured to the arm 254 and a weight holder 260 is secured to the arm 256. A micro pin mount 262 is secured to the top of the arm 254 and a micro pin mount 264 is secured to the top of the arm 256.

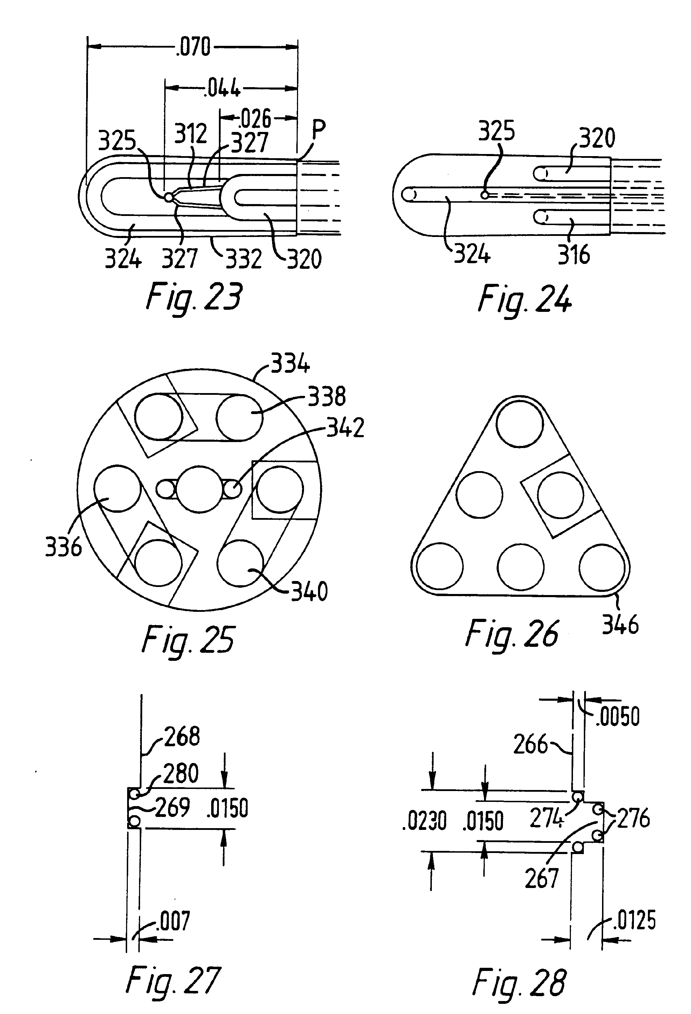

A fibre guide 266 is secured to a bottom portion of the arm 254 and a fibre guide 268 is secured to a bottom portion of the arm 256. The micro pin mount 262 has two micro pins, each for independently holding an optical fibre. The weight holder 258 has two weights, 270 and 272, one each for each of two optical fibres 274 and 276 supported from the micro pin mount 262. The weight holder 260 has a weight 278 for a fibre 280 supported from the micro pin mount 264. The weights 270, 272 and 278 are freely movable up and down on a wire extending through the weights; wire 282 extending through weights 270, 272 and secured to a top arm 284 and a bottom arm 286 of the weight holder 258; and wire 288 extending through the weight 278 and secured to a top arm 290 and a bottom arm 292 of the weight holder 260. Each weight has a sheet magnet 294 secured thereto. Optical fibres are clamped between the fixed magnets 294 and a free sheet magnet 296 which provides a sufficient clamping effect to hold the fibres and hang the weights from them to provide the desired tension. Each weight weighs about 18 grams. Notches are provided in the fibre guides 266, 268 and in a top shoulder 298 (e.g., Fig. 20c of each weight so that the fibres are held separately and independently in the apparatus 250. As shown in Fig. 27 the fibre guide 68 (shown partially) has a recess 269 for receiving and holding the fibre ends of the fibre 280. The fibre guide 266 (shown partially in Fig. 28) has a recess 267 for receiving and holding the fibre ends of fibres 274 and 276. (Dimensions in Figs. 26, 27 are in inches.) This insures formation of an optical probe of desired configuration. Three pairs of vacuum tubes 300, 302, 304 receive and hold the ends of each of the optical fibres 274, 276 and 280 respectively. Each vacuum tube receives and holds one fibre end. By thus holding the fibre ends, the use of the apparatus and handling of the fibres is facilitated and some minimal tension is applied to the fibres.

Since the arms 254 and 256 are pivotable with respect to the upright member 252 one or more optical fibres can easily be emplaced on each arm's micro hooks prior to closing of the arms 254, 256. Closing the arms into proximity with each other moves the fibres into a desired relationship with each other so that an ultimate configuration and size for an optical probe is achieved.

Potting material (e.g., commercially available ELC 4481 of Electro-Lite Corp.) can be applied manually to the exposed portion of the optical fibres between the top portions and bottom portions of the arms 254 and 256.

As with the apparatus 150 an ultraviolet lamp may be used with the apparatus 250 for curing the potting material.

Internal stresses in the fibre bends around the micro hooks can be relieved by applying heat to the micro hook holders, the micro hooks, and the fibre bends while the fibres are still emplaced on the apparatus 250 before the application of potting material. For example, hot air at about 80°C is blown at the micro hook holders. The holders and hooks heat up gradually (e.g., in about 90 seconds) so that the temperature of the fibre bends comes up to about 80°C. This helps to make the bends more permanent and reduces the tendency of the fibres to spring back. Auxiliary weights (e.g., double the weight of the weights 270, 272, 278) are temporarily applied to the fibres (e.g., by hanging onto the weights 270, 272 and 278) during the heat treatment to achieve optimum bending stress while the temperature is elevated.

The potted assembly is removed from the apparatus. Potting material is applied to the tip of the assembly - the portions hanging over the micro hooks including the fibre bends. This material is then cured. Thus the fibre bends and a portion of the fibres adjacent the fibre bends is covered with cured potting material and the fibres (and thermocouple or other device) in these portions are not in contact. The harness (tubing, connector, junction box) is assembled and then sample chambers are formed in the fibres. Coatings are applied; indicators are emplaced in the sample chambers; and membranes are applied over the sample chambers by placing membrane material dissolved in a suitable solvent over the sample chambers; e.g., cellulose acetate in acetone as a membrane over a pH indicator, polydimethyl siloxane in methylene chloride as a membrane over a CO₂ or O₂ chamber or polycarbonate in chloroform. The resulting assembly is useful as an optical probe.

Fig. 21 shows the micro pin mounts 262, 264 in more detail. These micro pin mounts are configured so that the fibres to be worked with and treated hang independently of each other. Micro pin mount 262 has a cantilevered pin 310 from which hangs a thermocouple 312 (not shown in Figs. 20a, b) and a cantilever pin 314 from which hangs an optical fibre 316. The pins are preferably disposed at an angle to maintain the fibres thereon. Micro pin mount 264 has a cantilevered pin 318 from which hangs an optical fibre 320 and cantilevered pin 322 from which hangs a fibre 324. The pins 310, 314 and 318 are emplaced in grooves that are about 0.13mm (5 mils wide). The pin 322 is emplaced in a groove that is about 0.33mm (13 mils) wide. Thus an optical fibre hanging over pin 322 hangs with its ends spaced further apart than the ends of a fibre hanging over one of the other pins.

Figs. 22, 23 and 24 show an optical probe 332 (like the optical probe 60 previously described regarding sample chambers, coatings and membranes) corresponding to the fabrication layout of Fig. 21. Dimensions given in Figs. 22 and 23 are in inches. The distance between the strands of the thermocouple fibre is .005 inches. The size of sample chambers 326, 328 and 330 may preferably range in width between about 130 to about 160 microns with 145 microns preferred. The overall diameter of the probe 332 as shown is 650 microns (.0256 inches). This diameter preferably ranges from about 600 microns to about 730 microns with preferred diameter being 650 microns. As shown there is a .0014 inches thick cured potting layer between the fibres and the exterior surface of the probe so it will fit easily through a 20 gauge cannula and permit blood to be withdrawn therefrom. This also separates the membrane from the optical path. As shown in Figs. 22 and 24 the fibres 316, 320 and 324 and thermocouple 312 do not contact each other in the tip end of the probe. The thermocouple 312 has a small (e.g., 10 mil) metal bead 325 to which are connected two 2 mil diameter metal leads 327. Commercially available Type E thermocouples can be used or a thermister. As shown in Fig. 23 the length from line P (line P represents the extent of the potting material applied to the probe tip) to the exterior of the first fibre bend is about .026 inches. A preferable range for this distance is .020 to .031 inches. The distance from point P to the thermocouple is about .044 inches (and ranged preferably between .040 and .051 inches). The distance from point P to the end of fibre 324 is shown as about .070 inches (preferably ranging between .066 and .075 inches). The thermocouple is located preferably interiorly of all the fibres because it needs no tangential access to fluids and it can occupy interior space not occupied by optical fibres.

Fig. 25 illustrates a probe 334 in which all fibre bends (of fibres 336, 338 and 340) are of substantially the same diameter. A thermocouple 342 is present in the centre of the probe 344.

Fig. 26 presents an optical probe 346 produced with apparatus 150, 160 using a spider as shown in Fig. 4a. Since the optical fibres in the apparatus 150 contact and compete with each other for position, the generally triangular disposition achieved requires more potting to effect a desired cover of potting material over the optical fibres. In this sense a circular configuration of the optical fibres of the probe (e.g., as shown in Fig. 10) is more efficient.

Various modifications to the method of construction described are envisaged. For example, the sample chambers could be formed by placing the ends of two fibres facing one another.

It should be appreciated that whilst the method described is primarily intended for the production of optical probes with a plurality of sensors it is also applicable to the production of an optical probe with a single optical fibre and a single sample chamber.

## Claims

1. A method of making an optical fibre bundle, characterized in that it comprises the steps of:-
a) bending a plurality of optical fibres (30, 31, 32, 40, 41, 42; 50, 51, 52) to form a fibre bend in each;
b) suspending the plurality of optical fibres at the fibre bends over at least one suspension member (33, 34, 35; 43, 44, 45; 53, 54);
c) holding the fibres taut to maintain the fibres bent;
d) applying potting material to the plurality of optical fibres;
e) curing the potting material; and
f) removing the plurality of fibres from the suspension member.

2. An apparatus for making an optical fibre bundle as claimed in Claim 1, the apparatus comprising;
an upwardly extending member (152);
suspension means (154) secured to the upwardly extending member (152) for disposing thereover a plurality of optical fibres (176), the fibres thus disposed each having a fibre bend extending over the suspension means (154); and
holding means (158) secured to the upwardly extending member (152) for holding at least one end of an optical fibre distant from its fibre bend.

3. An optical probe made by a method according to Claim 1, said optical probe comprising a plurality of optical fibres, each having a bend therein, the fibre bends disposed near a tip of the probe;
the fibre bends and a portion of the fibres adjacent the fibre bends encapsulated in cured potting material;
each fibre having a sample chamber (64, 65, 66) therein containing a chemical indicator which reacts to a particular chemical substance that comes in contact with the chemical indicator.

4. A probe according to Claim 3, characterized in that no two fibre bends are in contact with each other and no portions of the fibres adjacent the fibre bends are in contact with each other.

5. A probe according to Claim 3 or 4, characterized in that the sample chambers (64, 65, 66) are five-walled openings.

6. A probe according to Claim 3, 4 or 5, characterized in that the sample chambers (64, 65, 66) are longitudinally spaced apart from each other by at least 665 microns.

7. A probe according to any of Claims 3 to 6, characterized in that there are three sample chambers (64, 65, 66), one containing a pH indicator, one containing an oxygen indicator, and one containing a carbon dioxide indicator.

8. A probe according to any of Claims 3 to 7, characterized in that no sample chamber (64, 65, 66) is closer to an end tip of the probe than 2240 microns.

9. A probe according to any of Claims 3 to 8, characterized in that the probe is between 600 and 730 microns in diameter.

10. A probe according to any of Claims 3 to 9, including a thermocouple (325) with a metal bead in the end of the probe and two metal leads extending from the end of the probe with the fibre ends.

11. A probe according to any of Claims 3 to 10, and a plastic connector (230) secured thereto, part of the connector being removable, the connector for facilitating introduction of the probe into an intra-arterial cannula, the connector having a separate channel (105) that permits fluids to be taken from or introduced into the cannula while the probe is in place within the cannula;
a tubing harness (240) connected to the connector (230) for protecting and containing a portion of the optical fibres of the probe;
the tubing harness (240) extending from the connector (230) to a junction box (231);
a sensor interface unit (120) which communicates with the junction box (231) and which transmits light input from a base unit to the probe and which transmits light coming out of the probe to the base unit, and wherein said base unit includes a source of light and means for processing light returning from said probe.

## Patentansprüche

1. Verfahren zur Herstellung eines optischen Glasfaserbündels, dadurch gekennzeichnet, daß es die folgenden Schritte enthält:
a) eine große Anzahl von optischen Glasfasern (30, 31, 32, 40, 41, 42; 50, 51, 52) biegen, um in jeder eine Glasfaserkrümmung zu bilden;
b) die große Anzahl der optischen Glasfasern an den Glasfaserkrümmungen über wenigstens einen Hängekörper (33, 34, 35; 43, 44, 45; 53, 54) aufhängen;
c) die Glasfasern gespannt halten, um die Glasfasern gekrümmt zu halten;
d) Vergußmaterial auf die große Anzahl von optischen Glasfasern anwenden;
e) das Vergußmaterial aushärten und
f) die große Anzahl von Glasfasern von dem Hängekörper entfernen.

2. Gerät zur Herstellung eines optischen Glasfaserbündels nach Anspruch 1, wobei das Gerät aus folgendem besteht:
einem nach oben sich streckenden Teil (152);
einem Hängemittel (154), befestigt an dem nach oben sich streckenden Teil (152), um darüber eine große Anzahl von optischen Glasfasern (176) anzuordnen, die Glasfasern werden so angeordnet, daß jede eine Glasfaserkrümmung hat, die sich über das Hängemittel (154) erstreckt; und
einer Haltevorrichtung (158), befestigt an dem nach oben sich streckenden Teil (152), um wenigstens ein Ende einer optischen Glasfaser von ihrer Glasfaserkrümmung entfernt zu halten.

3. Optische Sonde, hergestellt durch ein Verfahren nach Anspruch 1, diese optische Sonde enthält eine große Anzahl von optischen Glasfasern, wobei jede eine Krümmung darin hat, die Glasfaserkrümmungen sind nahe einer Spitze der Sonde angeordnet;
die Glasfaserkrümmungen und ein Teil der Glasfasern, die an die Glasfaserkrümmungen grenzen, sind in ausgehärtetem Vergußmaterial eingekapselt;
jede Glasfaser hat eine Probenkammer (64, 65, 66), worin ein chemischer Indikator enthalten ist, welcher auf eine besondere chemische Substanz reagiert, die mit dem chemischen Indikator in Berührung kommt.

4. Sonde nach Anspruch 3, dadurch gekennzeichnet, daß keine zwei Glasfaserkrümmungen in Berührung miteinander sind und keine Teile der Glasfasern, die an die Glasfaserkrümmungen grenzen, miteinander in Berührung sind.

5. Sonde nach Anspruch 3 oder 4, dadurch gekennzeichnet, daß die Probenkammern (64, 65, 66) fünfwandige Aussparungen sind.

6. Sonde nach Anspruch 3, 4 oder 5, dadurch gekennzeichnet, daß die Probenkammern (64, 65, 66) längs mit Zwischenraum voneinander durch wenigstens 665 Mikrometer angeordnet sind.

7. Sonde nach einem der Ansprüche 3 bis 6, dadurch gekennzeichnet, daß es drei Probenkammern gibt (64, 65, 66), wobei eine einen pH-Indikator, eine einen Sauerstoffindikator und eine einen Kohlendioxydindikator enthält.

8. Sonde nach einem der Ansprüche 3 bis 7, dadurch gekennzeichnet, daß keine Probenkammer (64, 65, 66) dichter als 2.240 Mikrometer an einer Endspitze der Sonde ist.

9. Sonde nach einem der Ansprüche 3 bis 8, dadurch gekennzeichnet, daß die Sonde einen Durchmesser von 600 bis 730 Mikrometern hat.

10. Sonde nach einem der Ansprüche 3 bis 9 einschließlich eines Thermoelementes (325) mit einem Metallkügelchen am Ende der Sonde und zwei Metallzuführungen, die sich vom Ende der Sonde bei den Glasfaserenden erstrecken.

11. Sonde nach einem der Ansprüche 3 bis 10 und ein daran befestigter Kunststoffverbinder (230), wobei ein Teil des Verbinders abnehmbar ist, der Verbinder zum Erleichtern der Einführung der Sonde in eine intraarterielle Kanüle dient, wobei der Verbinder einen separaten Kanal (105) hat, der es erlaubt, Flüssigkeiten aus der Kanüle zu nehmen oder in dieselbige hineinzugeben, während die Sonde an der Verwendungsstelle innerhalb der Kanüle ist;
mit einer Schlauchausrüstung (240), verbunden mit dem Verbinder (230) zum Schützen und Einschließen eines Teiles der optischen Glasfasern der Sonde;
wobei sich die Schlauchausrüstung (240) von dem Verbinder (230) bis zu einer Anschlußdose (231) erstreckt;
mit einer Sensorschnittstelleneinheit (120), die mit der Anschlußdose (231) in Verbindung steht und welche einen Lichteintritt von einer Grundeinheit zu der Sonde weiterleitet und welche Licht, das aus der Sonde austritt, zu der Grundeinheit weiterleitet, und worin die Grundeinheit eine Lichtquelle und Mittel zur Untersuchung von Licht einschließt, das von der Sonde zurückkehrt.

## Revendications

1. Procédé de fabrication d'un faisceau de fibres optiques, caractérisé en ce qu'il comprend les étapes consistant à :
a) courber une pluralité de fibres optiques (30, 31, 32, 40, 41, 42 ; 50, 51, 52) de manière à former une courbure dans chaque fibre.
b) suspendre la pluralité des fibres optiques au niveau des courbures de fibres sur au moins un élément de suspension (33, 34, 35 ; 43, 44, 45 ; 53, 54) ;
c) maintenir les fibres tendues pour conserver la courbure des fibres ;
d) appliquer un matériau d'empotage à la pluralité des fibres optiques ;
e) traiter le matériau d'empotage ; et
f) enlever la pluralité de fibres de l'élément de suspension.

2. Dispositif destiné à la fabrication d'un faisceau de fibres optiques selon la revendication 1, le dispositif comprenant ;
un élément s'étendant verticalement (152) ;
un moyen de suspension (154) fixé à l'élément s'étendant verticalement (152) pour disposer sur lui une pluralité de fibres optiques (176), les fibres ainsi disposées présentant chacune une courbure de fibre s'étendant sur le moyen de suspension (154) ; et
un moyen de maintien (158) fixé à l'élément s'étendant verticalement (152) pour maintenir au moins une extrémité d'une fibre optique distante de sa courbure de fibre.

3. Sonde optique fabriquée suivant un procédé selon la revendication 1, ladite sonde optique comprenant une pluralité de fibres optiques, chacune présentant une courbure, les courbures de fibres étant disposées près d'une pointe de la sonde ;
les courbures de fibres et une partie des fibres adjacentes aux courbures de fibres étant encapsulées dans un matériau d'empotage traité ;
chaque fibre comportant une chambre d'échantillon (64, 65, 66) contenant un indicateur chimique qui réagit à une substance chimique particulière qui vient en contact avec l'indicateur chimique.

4. Sonde selon la revendication 3, caractérisée en ce que des courbures de deux fibres ne sont pas en contact l'une avec l'autre et en ce les parties parties de fibre adjacente aux courbures de fibre ne sont pas en contact l'une avec l'autre.

5. Sonde selon la revendication 3 ou 4, caractérisée en ce que les chambres d'échantillon (64, 65, 66) sont des ouvertures dites à cinq parois.

6. Sonde selon la revendication 3, 4 ou 5, caractérisée en ce que les chambres d'échantillon (64, 65, 66) sont séparées longitudinalement l'une de l'autre d'une distance d'au moins 665 microns.

7. Sonde selon l'une quelconque des revendications 3 à 6, caractérisée en ce qu'il existe trois chambres d'échantillon (64, 65, 66) , une contenant un indicateur de pH, une autre contenant un indicateur d'oxygène , et la dernière contenant un indicateur de dioxyde de carbone.

8. Sonde selon l'une quelconque des revendications 3 à 7, caractérisée en ce qu'aucune des chambres d'échantillon (64, 65, 66) n'est plus rapprochée d'une pointe d'extrémité de la sonde de plus de 2240 microns.

9. Sonde selon l'une quelconque des revendications 3 à 8 , caractérisée en ce que la sonde a un diamètre compris entre 600 à 730 microns.

10. Sonde selon l'une quelconque des revendications 3 à 9, incluant un thermocouple (325) comportant une perle métallique à l'extrémité de la sonde et deux conducteurs métalliques s'étendant à partir de l'extrémité de la sonde comportant les extrémités de fibres.

11. Sonde selon l'une quelconque des revendications 3 à 10 , et connecteur de plastique (230) fixé à la sonde, une partie du connecteur étant déplaçable, le connecteur étant destiné à faciliter l'introduction de la sonde dans une canule intra-artérielle, le connecteur comportant un canal séparé (105) qui permet aux fluides d'être prélévés ou introduits dans la canule alors que la sonde est en place à l'intérieur de la canule ;
un harnais de tube (240) connecté au connecteur (230) pour protéger et contenir une partie des fibres optiques de la sonde ;
le harnais de tube (240) s'étendant du connecteur à un boitier de raccordement (231) ;
une unité d'interface de capteur (120) qui communique avec le boitier de raccordement (231) et qui transmet une entrée de lumière venant de la sonde vers l'unité de base , et dans laquelle ladite unité de base comprend une source de lumière et un moyen pour traiter la lumière revenant de ladite sonde.
